Europäisches Patentamt

(19) European Patent Office  (11) Publication number: **0 036 271**

Office européen des brevets  **A1**

(12)  **EUROPEAN PATENT APPLICATION**

(21) Application number: **81300914.9**  (51) Int. Cl.³: **B 60 T 13/12**
(22) Date of filing: **05.03.81**  **B 60 T 13/24**

(30) Priority: **17.03.80 GB 8008947**

(43) Date of publication of application:
**23.09.81 Bulletin 81/38**

(84) Designated Contracting States:
**DE FR GB**

(71) Applicant: **LUCAS INDUSTRIES LIMITED**
**Great King Street**
**Birmingham, B19 2XF(GB)**

(72) Inventor: **Farr, Glyn Phillip Reginald**
**21 The Hamlet Leek Wootton**
**Warwick Warwickshire(GB)**

(74) Representative: **Wain, Christopher Paul et al,**
**A.A. THORNTON & CO. Northumberland House 303-306**
**High Holborn**
**LONDON WC1V 7LE(GB)**

(54) **Master cylinder assemblies.**

(57) A master cylinder assembly for a dual circuit braking system comprises a tandem master cylinder having primary and secondary pistons (5,13) working in respective primary and secondary chambers (8,14). Between the chambers is an auxiliary chamber (18) the pressure in which acts on a part (13A) of the secondary piston in a sense to pressurise the secondary chamber (14), and a pressure amplifier is connected between the primary chamber (8) and the auxiliary chamber (18). In order to permit equalisation of the pressures in the brake circuits, so as to allow the assembly to be used in, say, X-split and L-split systems the secondary chamber (14) is adapted for connection to one brake circuit (16,17) and the amplifier outlet (19) is adapted for connection to the other brake circuit (20,22), and the volumetric requirements of the first and second circuits are arranged so that each is proportional to the primary piston travel.

./...

FIG. 1.

- 1 -

MASTER CYLINDER ASSEMBLIES

This invention relates to master cylinder assemblies for use in vehicle brake systems having a plurality of brake circuits.

It is often desirable in such assemblies to incorporate a servo or "booster" system which increases the pressure applied to wheel brake cylinders, as compared to the pressure generated by the master cylinder. An example of such an assembly is described in the Patent Specification of British Patent Application No. 7835227. In that Specification there is described and illustrated a tandem master cylinder having primary and secondary pistons and in which the primary chamber is connected directly to one pair of front wheel brake cylinders. The other, secondary chamber is connected both to the wheel cylinders of the rear wheel brakes and to another pair of front wheel brake cylinders. Between the primary and secondary chambers, and sealed therefrom, is an auxiliary chamber, the pressure in which acts on the secondary piston and on a small-diameter integral extension of the primary piston which extends sealingly through a wall separating the primary chamber and the auxiliary chamber. The auxiliary chamber is connected to the primary chamber and to a pump through a control valve operable to boost the pressure in the auxiliary chamber to assist the pressurisation of the secondary chamber via the secondary piston.

The assembly described in said Specification has a number of disadvantages, amongst which are that the circuit connected to the primary chamber is at all times unboosted, i.e. it is always subjected to only the pressure in the primary chamber, but in normal operation the pressures in the primary and secondary circuits are equal, because the diameters of the booster control piston are equal. However, in the event of the hydrodynamic power source failing the pressure in the secondary circuit will be different from the pressure in the primary circuit. For example if the primary circuit has a relatively low resilience it will dictate the travel of the master piston, and as a result the secondary non-boosted circuit will not be fully pressurised, since full secondary piston travel will not be achieved.

This is a characteristic particularly unsuitable for diagonal, or "X" split systems and also "L" split systems, or any combination of split systems having equal volumes.

The present invention aims to obviate one or more of the disadvantages of the said prior assembly.

In accordance with the present invention, there is provided a master cylinder assembly for a dual circuit braking system, comprising a tandem master cylinder having primary and secondary pistons working in respective primary and secondary chambers, and an auxiliary chamber the pressure in which acts on the secondary piston in a sense to pressurise the secondary chamber, and a pressure amplifier connected between the primary chamber and the auxiliary chamber, characterised in that the secondary chamber is adapted for connection to one brake circuit and the amplifier outlet is adapted for connection to the other brake circuit and in that the volumetric requirements of said first and second circuits are each proportional to the primary piston travel.

Preferably the auxiliary chamber has an outlet for connection to said other circuit.

Two forms of a master cylinder assembly in accordance with the invention for a vehicle braking system will now be described, by way of example, with reference to the accompanying drawings in which:-

Figure 1 is an axial cross-sectional view of one form of assembly, and

Figure 2 is an axial cross-sectional view of the other form of assembly.

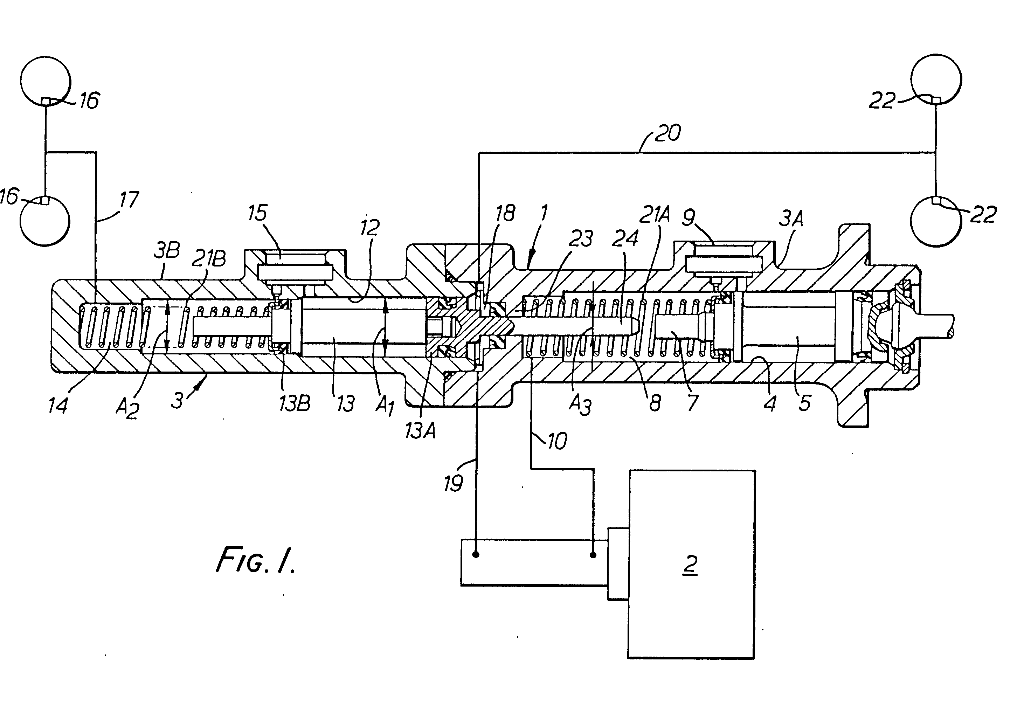

Referring to Figure 1, assembly comprises a tandem master cylinder 1 for connection to primary and secondary braking circuits and a pressure amplifier or "booster" 2 which may, for example, be in the form of a vacuum servo unit, such as is described in the specification of British Patent No. 1108568. The master cylinder 1 has a housing 3 formed by tow interconnected parts 3A,3B, the rear part 3A having a bore 4 within which a primary piston 5 sealingly slides. At its rear end the piston 5 is engageable by a push rod (not shown) and at its forward end the piston has an extension 7. Forwardly of the piston 5 is defined a primary chamber 8 which communicates with a reservoir inlet 9 and, through a pressure line 10, with an inlet of the pressure amplifier 2.

The forward cylinder part 3B has a stepped blind bore 12 within which a differential-area secondary piston 13 sealingly slides, the piston having parts 13A, 13B having cross-sectional areas $A_1$,$A_2$ respectively. The piston 13 and cylinder part 3B define a secondary chamber 14 communicating with a reservoir inlet 15 and with a set of wheel brake cylinders 16 through a pressure line 17. Springs 21A,21B located in the respective primary and secondary chambers bias the respective pistons 5,13 rearwardly to their illustrated inoperative positions.

Rearwardly of the secondary piston 13 is an auxiliary chamber 18 which is connected by pressure line 19 to the outlet of the pressure amplifier 2 and by a pressure line 20 to another set of wheel brake cylinders 22. Extending from the secondary piston 13 sealingly through a wall 23 separating auxiliary chamber 18 and primary chamber 8 is an extension 24 having a cross-sectional area $A_3$. The extension 24 is spaced from, but engageable with, the extension 7 of the primary piston, as will be described below.

In operation, the movement of the push rod to the left moves primary piston 5 to shut off reservoir inlet 9 and to pressurise chamber 8, the pressure being transferred through line 10 to the pressure amplifier 2. The increased pressure operates a control valve (not shown) in the amplifier 2 and a "boosted" pressure is developed by the amplifier 2 and passed through line 19, auxiliary chamber 18 and line 20 to the set of wheel cylinders 22. Thus, the pressure from amplifier 2 feeds the wheel cylinders 22 directly.

The boosted pressure in auxiliary chamber 18 acts on the secondary piston 13 to move that piston forwardly and shut off the reservoir inlet 15 and pressurise chamber 14 and thus, via line 17, the wheel cylinder 16. Thus the pressure from amplfier 2 indirectly feeds the wheel cylinders 16.

Preferably, the areas $A_1$, $A_2$ and $A_3$ are determined by the relationship $P_B A_2 = P_B (A_1 - A_3) + P A_3$ where $P_B$ is the boosted, or amplified pressure in chamber 18, and P is the hydrostatic pressure generated in chamber 8. Thus the pressures achieved in brake cylinders 16 and 22 may be substantially equal, and the two circuits may therefore be in the form of "X"-split, or "L" split brake systems, as well as the front/rear split system illustrated. In an alternative arrangement the area $A_2$ of the piston

part 13B is equal to the difference between the area $A_1$ of the part 13A and the area $A_3$ of the extension 24. In this way, the pressure developed in the secondary chamber 14 is always at least that of the auxiliary chamber 18.

In the event of failure of the pressure amplifier, there is uninterrupted flow through the amplifier and the pressure applied to the auxiliary chamber 18 and to the wheel cylinders 16 is that generated in the primary chamber 8 by the input or primary piston 5. This unboosted pressure now acts upon the full area $A_1$ firstly by its influence on area $A_3$ in chamber 8, and secondly by acting on the remaining annular area of piston 13 in chamber 18. Since area $A_1$ is slightly greater than area $A_2$ the pressure in chamber 14 will be proportionally greater than that in chambers 18 and 8. The pressure supplied to brake cylinders 16 will then be greater than that supplied to cylinders 22, which is desirable when the cylinders 16 are the front brake cylinders.

If there is failure in the primary circuit, the primary piston 5 moves into engagement with the secondary piston extension 24 and further movement pressurises the secondary chamber 14. In the event of failure in the secondary circuit, the secondary piston 13 moves forwardly under the action of pressure generated in the primary chamber 8 and auxiliary chamber 18, the primary circuit remaining in the pressure-boosted condition.

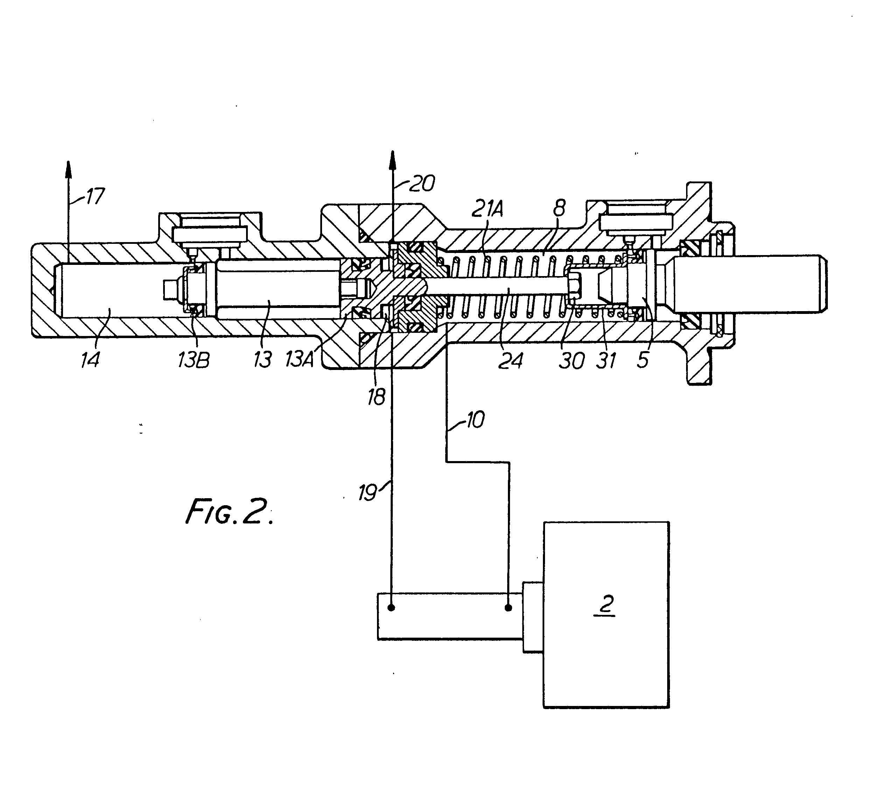

Figure 2 shows a form of a master cylinder which is a modification of that of Figure 1 and the same reference numerals have been used to denote corresponding parts.

The main difference is that the extension 24 of the piston 13 has an enlarged head 30, which may for example be a nut screwed on to the end of the extension 24, the head being retained within a cup-shaped element 31 to provide a lost-motion connection between the pistons 5,13. The element 31 is biased by the spring 21A in the primary chamber 8.

In this way, the spring 21A serves to bias both the piston 13 and the piston 5 to the illustrated inoperative positions and the spring 14 is not needed.

The above-described assembly has the following advantages:-

a)  both primary and secondary circuits are subjected to amplified or boosted pressure in normal operation;

b)  the boosted pressure in the secondary and intermediate chambers is assisted by the pressure in the primary chamber acting on the input area of the servo piston in the pressure amplifier 2;

c)  in the event of failure of pressure amplifier 2, pressure in both circuits is equalised:  the master cylinder then acts as a conventional tandem master cylinder;

d)  in the event of failure of either the primary or secondary circuits, the other circuit is still operative;

e)  extension 24 is separate from and spaced from primary piston extension 7, thus enabling a boosted pressure operation of both circuits with a small number of seal frictions to be overcome;

f)  when the "knee point" of the assembly is attained, i.e. the point at which the amplifier 2 no longer increases pressure, further pressure increase in the secondary circuit can be attained by further movement of piston 13, as in the operation of a conventional master cylinder;  and

g)  the amplifier 2 can be located at any convenient place, independent of the position of the brake pedal, and may be the same position for both left hand drive and right hand drive vehicles.

CLAIMS

1.        A master cylinder assembly for a dual circuit braking system, comprising a tandem master cylinder having primary and secondary pistons working in respective primary and secondary chambers, and an auxiliary chamber the pressure in which acts on the secondary piston in a sense to pressurise the secondary chamber, and a pressure amplifier connected between the primary chamber and the auxiliary chamber, characterised in that the secondary chamber (14) is adapted for connection to one brake circuit (16,17) and the amplifier outlet (19) is adapted for connection to the other brake circuit (20,22), and in that the volumetric requirements of said first and second circuits are each proportional to the primary piston travel.

2.        An assembly according to claim 1, characterised in that the auxiliary chamber (18) has an outlet for connection to said other circuit (20,22).

3.        An assembly according to claim 1 or 2, characterised in that the secondary piston (13) has an extension (24) which passes sealingly into the primary chamber (8) and is engageable by the primary piston (5).

4.        An assembly according to claim 3, characterised in that the secondary piston (13) defines a movable wall of the auxiliary chamber (18), and that said extension extends from said wall through the auxiliary chamber and into the primary chamber.

0036271

- 8 -

5.      An assembly according to any of claims 1 to 4, characterised in that the secondary piston has two parts of different area, one part (13B) being subjected to the pressure of secondary chamber (14) and the other part (13A) being subjected to the pressure of the auxiliary chamber (18).

6.      An assembly according to claim 5 as appendant to claim 4, characterised in that the said other part (13A) constitutes said movable wall, and that the cross-sectional area $(A_2)$ of the said one piston part (13B) is equal to the difference between the cross-sectional area $(A_1)$ of the other piston part (13A) and the cross-sectional area $(A_3)$ of the extension (24).

7.      An assembly according to any of claims 1 to 6, characterised in that the primary and secondary pistons are interconnected by a lost motion connection.

0036271

FIG. I.

FIG.2.

# EUROPEAN SEARCH REPORT

**0036271**

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | B 60 T 13/24 13/12 |
| | GB - A - 2 000 564 (GIRLING) <br> * page 1, line 128 to page 2, line 65; figure 1 * <br><br> -- <br><br> FR - A - 2 391 885 (BOSCH) <br><br> * page 4, lines 20 to 32; figure 1 * <br><br> -- <br><br> US - A - 3 729 931 (SHILTON) <br><br> * column 2, lines 40 to 62; figure 1 * <br> \ -- | 1 <br><br><br><br> 1 <br><br><br><br><br> 1 | |
| A | GB - A - 1 108 568 (GIRLING LTD.) <br><br> ---------- | | **TECHNICAL FIELDS SEARCHED (Int Cl.³)** <br><br> B 60 T 13/12 13/24 13/10 13/16 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| THE HAGUE | 24-06-1981 | HARTEVELD |

EPO Form 1503.1 06.78